# EUROPEAN PATENT APPLICATION

(11) **EP 4 116 633 A1**
(43) Date of publication of application: **11.01.2023**
(21) Application number: 20891465.5
(22) Date of filing: 05.03.2020
(51) Int. Cl.: F24F 11/43, F24F 11/48, F24F 11/54, F24F 11/61, F24F 11/89, F24F 13/22, F24F 1/0059

(54) **AIR CONDITIONER**

(71) Applicant: Hitachi-Johnson Controls Air Conditioning, Inc., Tokyo 105-0022 (JP)
(72) Inventor: OHATA, Ryosuke, Tokyo 1050022 (JP)
(74) Representative: MERH-IP Matias Erny Reichl Hoffmann Patentanwälte PartG mbB
(86) International application number: PCT/JP2020/009330
(87) International publication number: WO 2021/176638

(57) **Abstract**

Provided is an air-conditioner configured to properly perform washing of multiple indoor heat exchangers. The air-conditioner (100) includes a refrigerant circuit (Q) configured such that an outdoor unit (Uo) having a compressor (1) and an outdoor heat exchanger (2) and multiple indoor units (U1, U2, U3, U4) having indoor expansion valves (12) and indoor heat exchangers (10) are connected to each other through pipes, and a control section configured to control at least the compressor (1) and the multiple indoor expansion valves (12). In a case where among the multiple indoor units (U1, U2, U3, U4), an indoor unit satisfying a predetermined condition is present, the control section performs the processing of freezing or forming dew on the indoor heat exchanger (10) of the indoor unit while not performing the processing in the other indoor units not satisfying the predetermined condition. The predetermined condition is a condition regarding availability of the processing.

## Description

### TECHNICAL FIELD

The present invention relates to an air-conditioner.

### BACKGROUND ART

As the technique of bringing an indoor heat exchanger of an air-conditioner into a clean state, Patent Literature 1 describes, for example, washing operation in which a control device washes an indoor heat exchanger after frost or dew has been formed on the indoor heat exchanger.

### CITATION LIST

### PATENT LITERATURE

PATENT LITERATURE 1: Japanese Patent No. 6498374

### SUMMARY OF INVENTION

### PROBLEMS TO BE SOLVED BY INVENTION

Patent Literature 1 describes the washing operation in an air-conditioner including a single outdoor unit and a single indoor unit, but fails to describe the washing operation in a multi-type air-conditioner including multiple indoor units in a single system. For example, in a case where the washing operation is performed in the multi-type air-conditioner when a predetermined condition is satisfied in all of the indoor units, the following problems are caused. That is, no washing operation is performed in a case where there is even one indoor unit not satisfying the predetermined condition, and for this reason, there is a probability that the frequency of performing the washing operation is decreased and contaminants are accumulated in an indoor heat exchanger.

For this reason, the present invention is intended to provide an air-conditioner configured to properly perform washing of multiple indoor heat exchangers.

### SOLUTIONS TO PROBLEMS

For solving the above-described problems, the air-conditioner according to the present invention includes a refrigerant circuit configured such that an outdoor unit having a compressor and an outdoor heat exchanger and multiple indoor units having indoor expansion valves and indoor heat exchangers are connected to each other through pipes and a control section configured to control at least the compressor and the multiple indoor expansion valves. In a case where among the multiple indoor units, an indoor unit satisfying a predetermined condition is present, the control section performs the processing of freezing or forming dew on such an indoor heat exchanger of the indoor unit while not performing the processing in the other indoor units not satisfying the predetermined condition. The predetermined condition is a condition regarding availability of the processing.

### EFFECTS OF INVENTION

According to the present invention, the air-conditioner configured to properly perform washing of the multiple indoor heat exchangers can be provided.

### BRIEF DESCRIPTION OF DRAWINGS

Fig. 1 is a configuration diagram including a refrigerant circuit of an air-conditioner according to a first embodiment.
Fig. 2 is a diagram for describing an equipment connection relationship of the air-conditioner according to the first embodiment.
Fig. 3 is a functional block diagram of the air-conditioner according to the first embodiment.
Fig. 4 is a flowchart of processing executed by a control section of the air-conditioner according to the first embodiment.
Fig. 5 is a flowchart regarding washing processing in the air-conditioner according to the first embodiment.
Fig. 6 is a time chart of the washing processing in the air-conditioner according to the first embodiment.
Fig. 7 is a functional block diagram of an air-conditioner according to a variation of the first embodiment.
Fig. 8 is a flowchart regarding washing processing in an air-conditioner according to a second embodiment.
Fig. 9 is a flowchart regarding washing processing in an air-conditioner according to a third embodiment.

### DESCRIPTION OF EMBODIMENTS

### «First Embodiment»

### <Configuration of Air-Conditioner>

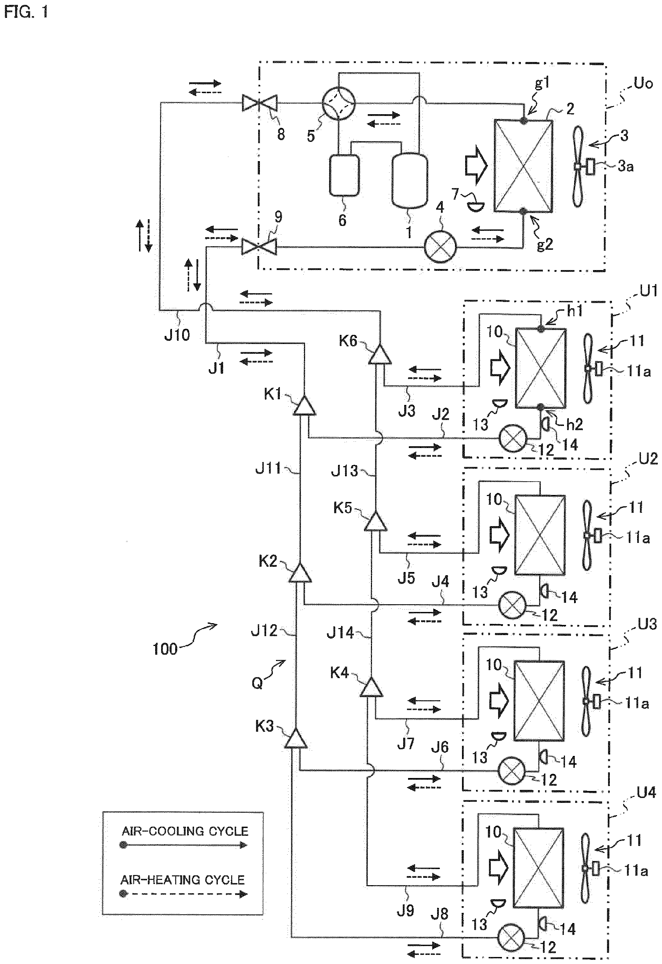

Fig. 1 is a configuration diagram including a refrigerant circuit Q of an air-conditioner 100 according to a first embodiment. Note that in Fig. 1, the flow of refrigerant in an air-cooling cycle (a refrigeration cycle in air-cooling operation) is indicated by solid arrows and the flow of refrigerant in an air-heating cycle (a refrigeration cycle in air-heating operation) is indicated by dashed arrows. Moreover, in Fig. 1, the flow of air in the vicinity of an outdoor heat exchanger 2 and four indoor heat exchangers 10 is indicated by white arrows.

The air-conditioner 100 is equipment configured to perform air-conditioning such as the air-cooling operation or the air-heating operation. Fig. 1 shows, as one example, the single-system multi-type air-conditioner 100 configured such that a single outdoor unit Uo and four indoor units U1, U2, U3 and U4 are connected to each other in a predetermined manner through pipes.

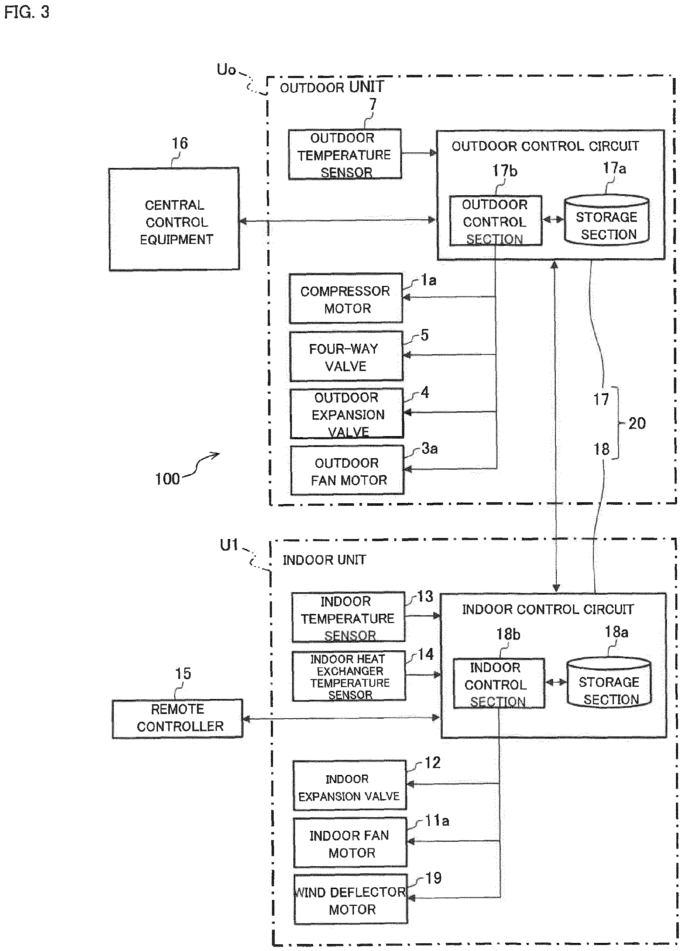

The air-conditioner 100 includes, as equipment provided in the outdoor unit Uo, a compressor 1, the outdoor heat exchanger 2, an outdoor fan 3, an outdoor expansion valve 4, a four-way valve 5, an accumulator 6, an outdoor temperature sensor 7, and gate valves 8 and 9. The compressor 1 is equipment configured to compress low-temperature low-pressure gas refrigerant to discharge high-temperature highpressure gas refrigerant, and includes a compressor motor 1a (see Fig. 3) as a drive source. For example, a scroll compressor or a rotary compressor is used as such a compressor 1.

The outdoor heat exchanger 2 is a heat exchanger configured to exchange heat between refrigerant flowing in a heat transfer pipe (not shown) of the outdoor heat exchanger 2 and external air sent from the outdoor fan 3. One end g1 of the outdoor heat exchanger 2 is, by switching of the four-way valve 5, connected to a suction side or a discharge side of the compressor 1, and the other end g2 is connected to a liquid-side pipe J1.

The outdoor fan 3 is a fan configured to send external air to the outdoor heat exchanger 2. The outdoor fan 3 includes an outdoor fan motor 3a as a drive source, and is placed in the vicinity of the outdoor heat exchanger 2. The outdoor expansion valve 4 is an electronic expansion valve configured to adjust the flow rate of refrigerant flowing in the outdoor heat exchanger 2 and depressurize refrigerant when the outdoor heat exchanger 2 functions as an evaporator. The outdoor expansion valve 4 is provided at the liquid-side pipe J1.

The four-way valve 5 is a valve configured to switch a refrigerant flow path in a predetermined manner according to an operation mode in air-conditioning. The accumulator 6 is a shell-shaped member configured to separate refrigerant flowing in through the four-way valve 5 into gas and liquid. After having been separated into the gas and the liquid by the accumulator 6, the gaseous refrigerant is guided to the suction side of the compressor 1.

The outdoor temperature sensor 7 is a sensor configured to detect an outdoor temperature as an external air temperature, and is placed at a predetermined location (in an example of Fig. 1, an air suction side of the outdoor heat exchanger 2) in the outdoor unit Uo. Note that although not shown in Fig. 1, each sensor configured to detect one or more of the discharge pressure, discharge temperature, suction pressure, and suction temperature of the compressor 1 may be provided as necessary.

The gate valves 8 and 9 are valves opened after installation of the air-conditioner 100 such that refrigerant sealed in the outdoor unit Uo flows across the entirety of the refrigerant circuit Q. One gate valve 8 is provided at a gas-side pipe J10, and the other gate valve 9 is provided at the liquid-side pipe J1.

The air-conditioner 100 includes, as equipment provided in the indoor unit U1, the indoor heat exchanger 10, an indoor fan 11, an indoor expansion valve 12, an indoor temperature sensor 13, and an indoor heat exchanger temperature sensor 14. The indoor heat exchanger 10 is a heat exchanger configured to exchange heat between refrigerant flowing in a heat transfer pipe (not shown) of the indoor heat exchanger 10 and indoor air (air in an air-conditioning room) sent from the indoor fan 11. One end h1 of the indoor heat exchanger 10 is connected to a gas-side pipe J3, and the other end h2 is connected to a liquid-side pipe J2.

The indoor fan 11 is a fan configured to send indoor air to the indoor heat exchanger 10. The indoor fan 11 has an indoor fan motor 11a as a drive source, and is placed in the vicinity of the indoor heat exchanger 10. The indoor expansion valve 12 is an electronic expansion valve configured to adjust the flow rate of refrigerant flowing in the indoor heat exchanger 10 and depressurize refrigerant when the indoor heat exchanger 10 functions as an evaporator. The indoor expansion valve 12 is provided at the liquid-side pipe J2.

The indoor temperature sensor 13 is a sensor configured to detect the temperature of indoor air as the temperature of the air-conditioning room. In the example of Fig. 1, the indoor temperature sensor 13 is placed on an air suction side of the indoor heat exchanger 10. The indoor heat exchanger temperature sensor 14 is a sensor configured to detect the temperature of the indoor heat exchanger 10. In the example of Fig. 1, the indoor heat exchanger temperature sensor 14 is placed in the vicinity of the other end h2 of the indoor heat exchanger 10 at the pipe J2. Note that the position of the indoor heat exchanger temperature sensor 14 is not limited to that in the example of Fig. 1. For example, the indoor heat exchanger temperature sensor 14 may be placed in the vicinity of one end h1 of the indoor heat exchanger 10 at the pipe J3. Alternatively, the indoor heat exchanger temperature sensor 14 may be directly placed at the indoor heat exchanger 10.

The remaining three indoor units U2, U3 and U4 have configurations similar to that of the above-described indoor unit U1, and therefore, description thereof will be omitted. Liquid-side connection portions K1, K2 and K3 are portions at which a refrigerant flow is branched during the air-cooling cycle and refrigerant flows are joined together during the air-heating cycle. For example, during the air-cooling cycle, refrigerant flowing in the liquid-side pipe J1 is distributed to the four indoor heat exchangers 10 in a predetermined manner sequentially through the liquid-side connection portions K1, K2 and K3.

Gas-side connection portions K4, K5 and K6 are portions at which refrigerant flows are joined together during the air-cooling cycle and a refrigerant flow is branched during the air-heating cycle. For example, during the air-cooling cycle, refrigerant flows from the four indoor heat exchangers 10 are joined together sequentially through the gas-side connection portions K4, K5 and K6, and the joined refrigerant flows toward the gas-side pipe J10.

According to the operation mode in air-conditioning, refrigerant circulates in a well-known refrigeration cycle (the air-cooling cycle or the air-heating cycle shown in Fig. 1) in the refrigerant circuit Q. For example, in the air-cooling cycle, refrigerant circulates sequentially through the compressor 1, the outdoor heat exchanger 2 (a condenser), the outdoor expansion valve 4, the indoor expansion valves 12, and the indoor heat exchangers 10 (the evaporators). On the other hand, in the air-heating cycle, refrigerant circulates sequentially through the compressor 1, the indoor heat exchangers 10 (condensers), the indoor expansion valves 12, the outdoor expansion valve 4, and the outdoor heat exchanger 2 (the evaporator).

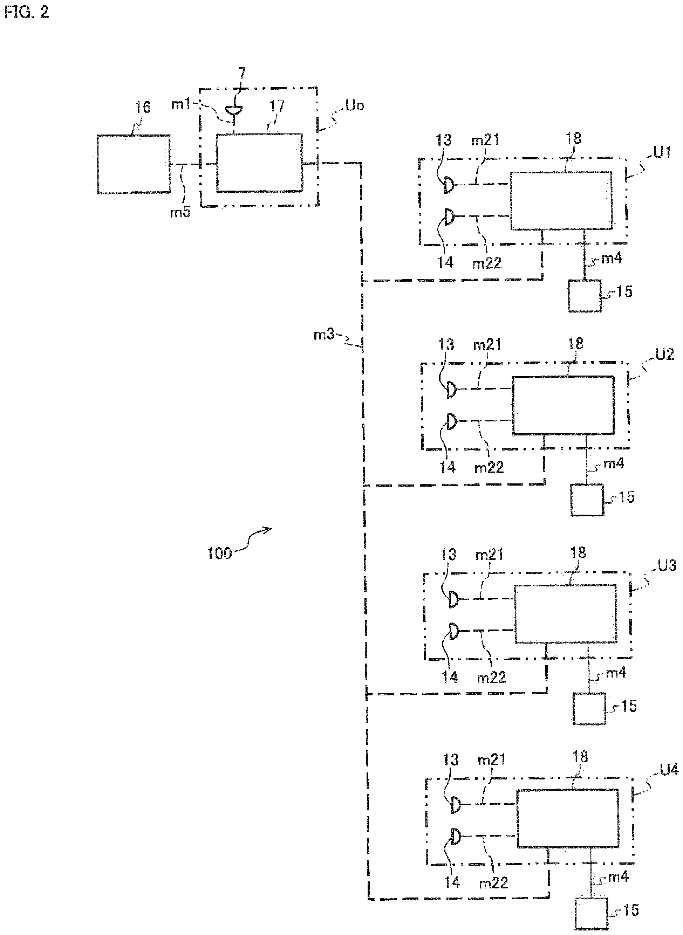

Fig. 2 is a diagram for describing an equipment connection relationship of the air-conditioner 100. As shown in Fig. 2, the air-conditioner 100 includes remote controllers 15 and central control equipment 16 in addition to the above-described configuration. Moreover, the outdoor unit Uo includes an outdoor control circuit 17, and the indoor units U1, U2, U3 and U4 each include indoor control circuits 18.

Although not shown in the figure, each of the outdoor control circuit 17 and the indoor control circuits 18 includes electronic circuits such as a central processing unit (CPU), a read only memory (ROM), a random access memory (RAM), and various interfaces. The CPU executes various types of processing in such a manner that programs stored in the ROM are read and loaded into the RAM.

As shown in Fig. 2, the outdoor control circuit 17 is connected to the outdoor temperature sensor 7 through a line m1. Based on a detection value of each sensor including the outdoor temperature sensor 7 and signals from the remote controllers 15, the outdoor control circuit 17 calculates a control command value for each type of equipment.

The outdoor control circuit 17 is connected to the indoor control circuits 18 through a communication line m3. The indoor control circuit 18 is connected to the indoor temperature sensor 13 through a line m21, and is connected to the indoor heat exchanger temperature sensor 14 through a line m22. The detection value of each of these sensors is transmitted to the outdoor control circuit 17 from the indoor control circuit 18 through the communication line m3. The indoor control circuit 18 controls the indoor fan motor 11a (see Fig. 1) and the indoor expansion valve 12 (see Fig. 1) in a predetermined manner based on the control command value calculated by the outdoor control circuit 17.

The four remote controllers 15 are each connected to the indoor units U1, U2, U3 and U4 through lines m4. In an example of Fig. 2, the remote controllers 15 are, in one-to-one correspondence, connected to the indoor control circuits 18 of the indoor units U1, U2, U3 and U4 through the lines m4. Note that multiple indoor units may be connected to a single remote controller 15. For example, the remote controller 15 connected to the indoor unit U1 has the function of providing a predetermined control command to the indoor unit U1 by user operation. Examples of the above-described control command include operation/stop of the air-conditioner 100, switching of the operation mode, a change in a set temperature, a set air volume, and a set air direction, and the start of later-described washing processing. Note that the same also applies to the other indoor units U2, U3 and U4.

The central control equipment 16 is a device configured to control, e.g., indications on the four remote controllers 15 and the settings of the four remote controllers 15, and is connected to the outdoor control circuit 17 of the outdoor unit Uo through a communication line m5. Note that a user (a manager) operates the central control equipment 16 in a predetermined manner so that, e.g., the indications on the four remote controllers 15 can be changed in addition to the air-conditioning settings.

Fig. 3 is a functional block diagram of the air-conditioner 100. Note that Fig. 3 shows the single indoor unit U1 of the four indoor units U1, U2, U3 and U4 and does not show the remaining three indoor units U2, U3 and U4. As shown in Fig. 3, the outdoor control circuit 17 includes a storage section 17a and an outdoor control section 17b. The storage section 17a stores, for example, data input from the central control equipment 16 in addition to the predetermined programs and the detection value of each sensor. The outdoor control section 17b controls, based on the data stored in the storage section 17a, the compressor motor 1a, the four-way valve 5, the outdoor expansion valve 4, the outdoor fan motor 3a and the like

On the other hand, the indoor control circuit 18 includes a storage section 18a and an indoor control section 18b. The storage section 18a stores, for example, data input through the remote controller 15 in addition to the predetermined programs and the detection value of each sensor. The indoor control section 18b controls, based on the data stored in the storage section 18a, not only the indoor expansion valve 12 and the indoor fan motor 11a but also a wind deflector motor 19 in a predetermined manner. Hereinafter, the outdoor control circuit 17 and the indoor control circuits 18 will be collectively referred to as a "control section 20." Note that the wind deflector motor 19 shown in Fig. 3 is a motor configured to adjust the angle of a wind deflector (not shown) of the indoor unit U1 to adjust the direction of air blown into the room.

Next, a series of processing for washing the indoor heat exchanger 10 (see Fig. 1) will be described. In many cases, a filter (not shown) for collecting dust is provided on the air suction side of the indoor heat exchanger 10. However, there is a probability that fine dust passes through the filter and adheres to the indoor heat exchanger 10. For this reason, the indoor heat exchanger 10 is preferably washed on a regular basis. Thus, in the first embodiment, after the indoor heat exchanger 10 has been frozen (frost has been formed on the indoor heat exchanger 10), ice or frost on the indoor heat exchanger 10 is melted to wash the indoor heat exchanger 10. Such a series of processing is called the "washing processing" for the indoor heat exchanger 10.

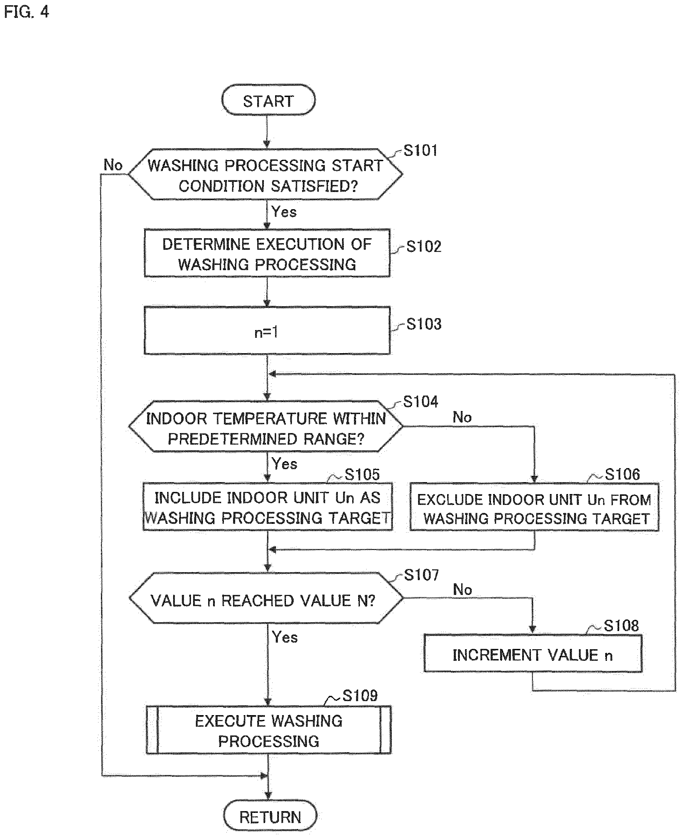

Fig. 4 is a flowchart of processing executed by the control section of the air-conditioner (see Figs. 1 and 3 as necessary). Note that Fig. 4 shows the processing regarding the washing processing and does not show other types of processing (e.g., normal air-conditioning operation). At a step S101, the control section 20 determines whether or not a washing processing start condition is satisfied. The washing processing start condition described herein is, for example, a condition where while all of the indoor units U1, U2, U3 and U4 are stopped, a cumulative value of an air-conditioning operation time (or a drive time of the indoor fan 11) from the end of the previous washing operation for a predetermined representative indoor unit (e.g., the indoor unit U1) reaches a predetermined value.

Note that the above-described representative indoor unit may be set in advance, or may be changed as necessary by operation of the central control equipment 16. Alternatively, a predetermined indoor unit (e.g., the indoor unit U1) connected to a representative remote controller 15 of the multiple remote controllers 15 (see Fig. 2) may be taken as the representative indoor unit. As another alternative, in a case where a washing processing start button (not shown) is pressed by predetermined operation of the central control equipment 16 or the remote controller 15 by the user, the control section 20 may determine that the washing processing start condition is satisfied.

At the step S101, in a case where the washing processing start condition is satisfied (S101: Yes), the processing of the control section 20 proceeds to a step S102. On the other hand, in a case where the washing processing start condition is not satisfied at the step S101 (S101: No), the processing of the control section 20 returns to "START" ("RETURN"). At the step S102, the control section 20 determines execution of the washing processing. Note that the washing processing (S109) is actually performed after the processing of steps S104 to S106 as described later has been performed for each of the indoor units U1, U2, U3 and U4.

Next, at a step S103, the control section 20 assumes n = 1. The value n is a value used when any of the indoor units U1, U2, U3 and U4 is specified as an indoor unit Un, and is incremented as necessary (S108).

At the step S104, the control section 20 determines whether or not the indoor temperature of the air-conditioning room where the indoor unit Un is placed is within a predetermined range. For example, in the case of n = 1, the control section 20 determines, at the step S104, whether or not the indoor temperature of the air-conditioning room where the indoor unit U1 is placed is within the predetermined range. The above-described "predetermined range" is an indoor temperature range as a reference when availability of execution of the washing processing is determined, and is set in advance.

Note that when the indoor temperature is too high, the amount (a moisture amount in the case of a relative humidity of 100%) of moisture contained in air per unit volume is great. As a result, there is a high probability that during freezing of the indoor heat exchanger 10, dew is formed on a housing (not shown) of the indoor unit including the indoor heat exchanger 10 and so-called dew dripping is caused. On the other hand, when the indoor temperature is too low, the amount of moisture contained in air per unit volume is small. As a result, there is a probability that even when the processing of freezing the indoor heat exchanger 10 is performed, frost formation on the indoor heat exchanger 10 does not progress. Considering this point, the "predetermined range" of the indoor temperature at the step S104 is set in advance.

At the step S104, in a case where the indoor temperature is within the predetermined temperature (S104: Yes), the processing of the control section 20 proceeds to the step S105. At the step S105, the control section 20 includes the indoor unit Un as a washing processing target. For example, in the case of n = 1, the control section 20 includes, at the step S105, the indoor unit U1 as the washing processing target.

On the other hand, in a case where the indoor temperature is outside the predetermined temperature at the step S104 (S104: No), the processing of the control section 20 proceeds to the step S106. At the step S106, the control section 20 excludes the indoor unit Un from the washing processing target. For example, in the case of n = 1, the control section 20 excludes, at the step S106, the indoor unit U1 from the washing processing target. After the processing at the step S105 or the step S106 has been performed, the processing of the control section 20 proceeds to a step S107.

At the step S107, the control section 20 determines whether or not the value n reaches a value N. The value N is the total number (four in the first embodiment) of indoor units U1, U2, U3 and U4, and is stored in advance in the control section 20. At the step S107, in a case where the value n does not reach the value N (S107: No), the processing of the control section 20 proceeds to the step S108. At the step S108, the control section 20 increments the value n. Then, after the value n has been incremented, the processing of the control section 20 returns to the step S104. As described above, the control section 20 determines the availability of the washing processing sequentially for the indoor units U1, U2, U3 and U4.

At the step S107, in a case where the value n reaches the value N (S107: Yes), the processing of the control section 20 proceeds to the step S109. At the step S109, the control section 20 performs the washing processing. That is, at the step S109, the control section 20 executes, among the indoor units U1, U2, U3 and U4, the washing processing for the indoor units (e.g., the indoor units U1, U2 and U3) included in the washing processing target. On the other hand, for the indoor unit (e.g., the indoor unit U4) excluded from the washing processing target, the control section 20 does not perform the washing processing at this time. Note that the washing processing includes, as described above, the processing of freezing the indoor heat exchanger 10.

As described above, in a case where the indoor unit satisfying a predetermined condition is present among the multiple indoor units U1, U2, U3 and U4, the control section 20 performs the processing of freezing the indoor heat exchanger 10 of such an indoor unit while not performing the processing of freezing the indoor heat exchangers 10 of the other indoor units not satisfying the predetermined condition.

The above-described "predetermined condition" is a condition regarding the availability of the processing of freezing the indoor heat exchanger 10. In the first embodiment, the "predetermined condition" is set in advance as the condition (S104) where the detection value of the indoor temperature sensor 13 is within the predetermined range.

Then, in the first embodiment, the control section 20 executes the following processing as the washing processing at the step S109. That is, in a case where among the multiple indoor units U1, U2, U3 and U4, the indoor unit that the detection value of the indoor temperature sensor 13 is within the predetermined range is present, the control section 20 performs the processing of freezing the indoor heat exchanger 10 in this indoor unit while not performing the above-described processing (freezing) in the other indoor units that the detection values of the indoor temperature sensors 13 are outside the predetermined range.

With this configuration, the control section 20 can perform the washing processing for the indoor unit (e.g., the indoor units U1, U2 and U3) that the air-conditioning room indoor temperature is within the temperature range suitable for the washing processing. Thus, the probability of an opportunity to perform the washing processing being missed can be prevented as compared to the case of performing the washing processing only when the predetermined condition is satisfied in all of the indoor units U1, U2, U3 and U4. Thus, according to the first embodiment, the control section 20 can perform the washing processing for the indoor heat exchanger 10 with a proper frequency.

Note that at the step S109, in a case where the control section 20 performs the washing processing for the multiple indoor units (e.g., the indoor units U1, U2 and U3), time periods for performing the washing processing for these indoor units may at least partially overlap with each other. With this configuration, frequent drive of the compressor 1 can be reduced.

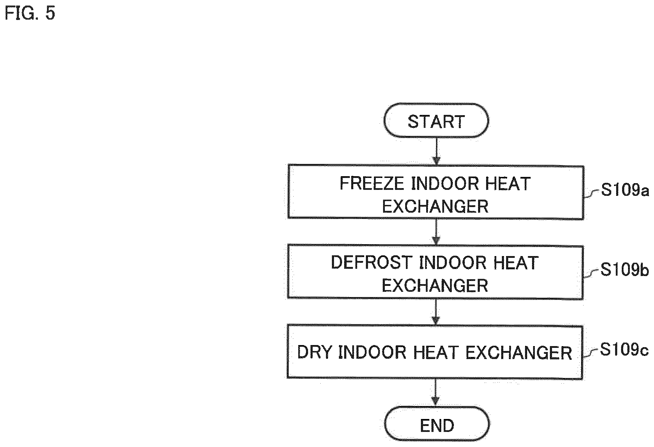

Fig. 5 is a flowchart regarding the washing processing in the air-conditioner (see Figs. 1 and 3 as necessary). That is, Fig. 5 specifically shows, regarding the step S109 of Fig. 4, the washing processing performed in each indoor unit. At a step S109a of Fig. 5, the control section 20 freezes the indoor heat exchanger 10. Although described later in detail, the control section 20 causes the indoor heat exchanger 10 to function as the evaporator such that frost is formed on the indoor heat exchanger 10. Next, at a step S109b, the control section 20 defrosts the indoor heat exchanger 10. For example, the control section 20 causes the indoor heat exchanger 10 to function as the condenser such that the frost on the indoor heat exchanger 10 is melted. In this manner, dust on the indoor heat exchanger 10 is washed away by water accompanied by defrosting of the frost.

At a step S109c, the control section 20 dries the indoor heat exchanger 10. For example, the control section 20 inhibits the air-conditioning operation for a predetermined period from defrosting, and dries the indoor heat exchanger 10 by natural convection of air. After the processing at the step S109c has been performed, the control section 20 ends a series of processing regarding the washing processing (END).

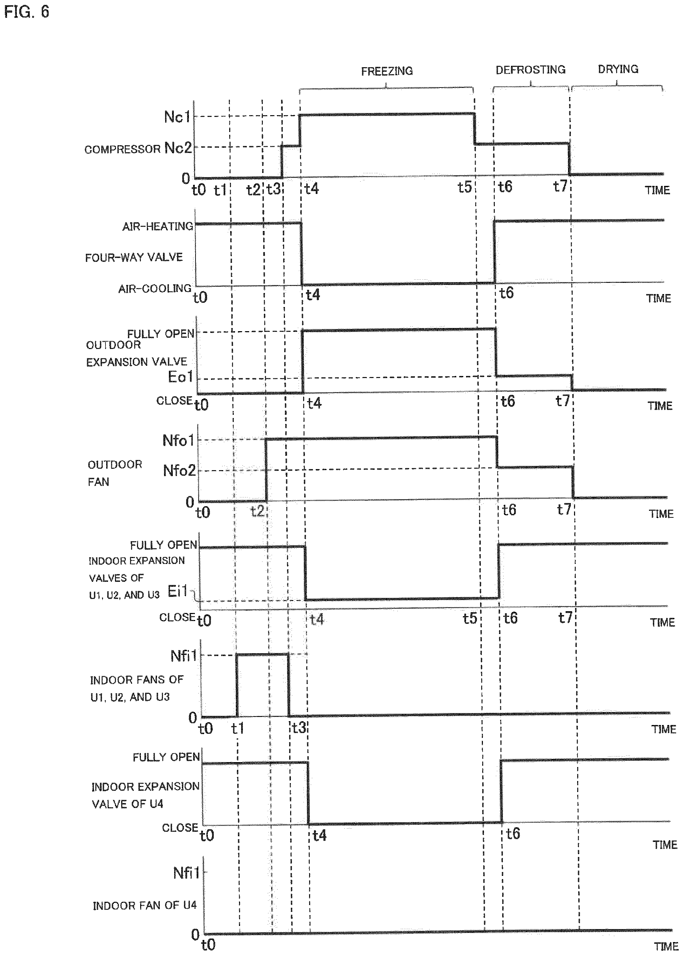

Fig. 6 is a time chart of the washing processing in the air-conditioner (see Figs. 1 and 3 as necessary). Hereinafter, a case where the indoor units U1, U2 and U3 are targeted for the washing processing at this time and the indoor unit U4 is not targeted for the washing processing at this time will be described as one example. In the example of Fig. 6, the air-conditioner 100 is in a stop state at a time point t0, and a valve body (not shown) of the four-way valve 5 is at an air-heating cycle position. As a preliminary preparation for freezing the indoor heat exchangers 10, the control section 20 drives, between time points t1 to t3, the indoor fans 11 of the indoor units U1, U2 and U3 at a predetermined rotation speed Nfi1. Moreover, the control section 20 drives, from the time point t2, the outdoor fan 3 at a predetermined rotation speed Nfo1. In this manner, the indoor and outdoor temperatures are detected. Then, the control section 20 maintains, between the time points t3 to t4, the outdoor expansion valve 4 in a valve close state while driving the outdoor fan 3, and drives the compressor 1 at a relatively-low rotation speed Nc2. In this manner, a pressure difference between a high pressure side and a low pressure side of the four-way valve 5 is adjusted as necessary.

After such processing has been performed, the control section 20 performs, between the time points t4 to t5, the processing of freezing the indoor heat exchanger 10 of each of the indoor units U1, U2 and U3 (S109a of Fig. 5). That is, the control section 20 switches the four-way valve 5 from the air-heating cycle to the air-cooling cycle at the time point t4. Moreover, the control section 20 brings, between the time points t4 to t5, the outdoor expansion valve 4 into an open state (a fully-open state in the example of Fig. 6) while driving the compressor 1 at a predetermined rotation speed Nc1.

The control section 20 throttles the indoor expansion valves 12 of the indoor units U1, U2 and U3 to a predetermined degree Ei1 of opening while closing the indoor expansion valve 12 of the indoor unit U4. The control section 20 performs the following processing during the processing (the time points t4 to t5) of freezing the indoor heat exchangers 10 of the indoor units U1, U2 and U3. That is, the control section 20 causes, among the multiple indoor units U1, U2, U3 and U4, the indoor heat exchangers 10 of the indoor units U1, U2 and U3 targeted for the processing (freezing) to function as the evaporators while closing the indoor expansion valve 12 of the indoor unit U4 not targeted for the processing (freezing). This can prevent low-temperature refrigerant from flowing in the indoor unit U4.

Note that the control section 20 throttles the indoor expansion valves 12 of the indoor units U1, U2 and U3 to the predetermined degree Ei1 of opening, and therefore, the indoor heat exchangers 10 of the indoor units U1, U2 and U3 function as the evaporators. As a result, low-temperature low-pressure refrigerant flows in the indoor heat exchangers 10, and the indoor heat exchangers 10 are frozen. For example, the control section 20 keeps, for a predetermined time, a state in which the detection values of the indoor heat exchanger temperature sensors 14 (see Fig. 3) are below zero.

During freezing (the time points t4 to t5) of each indoor heat exchanger 10, the control section 20 drives the outdoor fan 3 at the predetermined rotation speed Nfo1 while bringing each indoor fan 11 into a stop state. As a result, external air is sent into the outdoor heat exchanger 2 functioning as the condenser. Moreover, natural convection of air flows through a clearance among fins (not shown) of each indoor heat exchanger 10. This can reduce excessive cooling of the air-conditioning room. Note that during freezing of each indoor heat exchanger 10, the control section 20 may drive the indoor fan 11 at a low speed.

After the indoor heat exchangers 10 of the indoor units U1, U2 and U3 have been frozen, the control section 20 drives, between the time points t5 to t6, the compressor 1 at the relatively-low rotation speed Nc2 as a preliminary preparation for defrosting the indoor heat exchangers 10. In this manner, the pressure difference between the high pressure side and the low pressure side of the four-way valve 5 is adjusted as necessary. Note that in a case where the pressure difference between the high pressure side and the low pressure side of the four-way valve 5 is relatively great, the control section 20 decelerates the compressor 1 as the preliminary preparation for defrosting as shown in Fig. 6. In a case where the above-described pressure difference is too small, the control section 20 accelerates the compressor 1. Moreover, the control section 20 maintains the degrees of opening of the indoor expansion valves 12 of the indoor units U1, U2 and U3 at the predetermined degree Ei1 of opening upon freezing.

When each indoor heat exchanger 10 is defrosted (S109b of Fig. 5), the control section 20 switches the four-way valve 5 from the air-cooling cycle to the air-heating cycle. As described above, the pressure difference between the high pressure side and the low pressure side of the four-way valve 5 is adjusted as necessary, and therefore, the four-way valve 5 can be switched while the compressor 1 keeps driving. Note that after freezing of the indoor heat exchangers 10, the control section 20 may stop the compressor 1 once to switch the four-way valve 5 from the air-cooling cycle to the air-heating cycle, and the indoor heat exchangers 10 may be subsequently defrosted.

During defrosting (the time points t6 to t7) of each indoor heat exchanger 10, the control section 20 throttles the outdoor expansion valve 4 to a predetermined degree Eol of opening. Moreover, the control section 20 opens (fully opens in the example of Fig. 6) the indoor expansion valve 12 of each of the indoor units U1, U2, U3 and U4. In this manner, after the processing of defrosting the indoor heat exchangers 10, the control section 20 causes, among the multiple indoor units U1, U2, U3 and U4, the indoor heat exchangers 10 of the indoor units U1, U2 and U3 targeted for the processing (freezing) to function as the condensers while opening the indoor expansion valve 12 of the indoor unit U4 not targeted for the processing (freezing) (the time points t6 to t7). In this manner, frost on the indoor heat exchanger 10 of each of the indoor units U1, U2 and U3 is melted, and the indoor heat exchangers 10 are washed. Moreover, the indoor expansion valve 12 of the indoor unit U4 not targeted for the washing processing is opened so that accumulation of refrigerant in the indoor heat exchanger 10 of the indoor unit U4 can be prevented.

During defrosting (the time points t6 to t7) of the indoor heat exchangers 10, the control section 20 drives the outdoor fan 3 at a predetermined rotation speed Nfo2 while maintaining each indoor fan 11 in the stop state. This can reduce cold air accompanied by defrosting of the indoor heat exchangers 10 from flowing into the air-conditioning rooms from the indoor units U1, U2, U3 and U4. Note that during defrosting of each indoor heat exchanger 10, the control section 20 may drive the indoor fan 11 at a low speed.

After defrosting of each indoor heat exchanger 10, the control section 20 dries the indoor heat exchangers 10 for a predetermined time from the time point t7 (S109c of Fig. 5). In the example of Fig. 6, the control section 20 stops each type of equipment including each indoor fan 11. In such processing, the control section 20 may inhibit the air-conditioning operation based on operation of the remote controllers 15 for a predetermined time after the end of defrosting of the indoor heat exchangers 10 (the time point t7). This can prevent cold air from flowing into the air-conditioning rooms from the indoor units U1, U2 and U3, and can dry the indoor heat exchangers 10 by natural convection.

### <Advantageous Effects>

According to the first embodiment, in a case where the indoor unit satisfying the predetermined condition (S104 of Fig. 4) regarding the indoor temperature is present, the control section 20 performs the processing of freezing the indoor heat exchanger 10 of this indoor unit while not performing the processing of freezing the indoor heat exchangers 10 in the other indoor units not satisfying the predetermined condition. With this configuration, the probability of the opportunity to perform the washing processing being missed can be prevented as compared to the case of performing the washing processing only when the predetermined condition is satisfied in all of the indoor units U1, U2, U3 and U4. Thus, the control section 20 can perform the washing processing for the indoor heat exchanger 10 with the proper frequency.

### «Variation of First Embodiment»

In the first embodiment, the case where the availability of the washing processing is determined for each indoor unit based on the indoor temperature has been described, but the present invention is not limited to such a case. For example, the control section 20 may determine the availability of the washing processing for each indoor unit based on the humidity of the air-conditioning room instead of the indoor temperature.

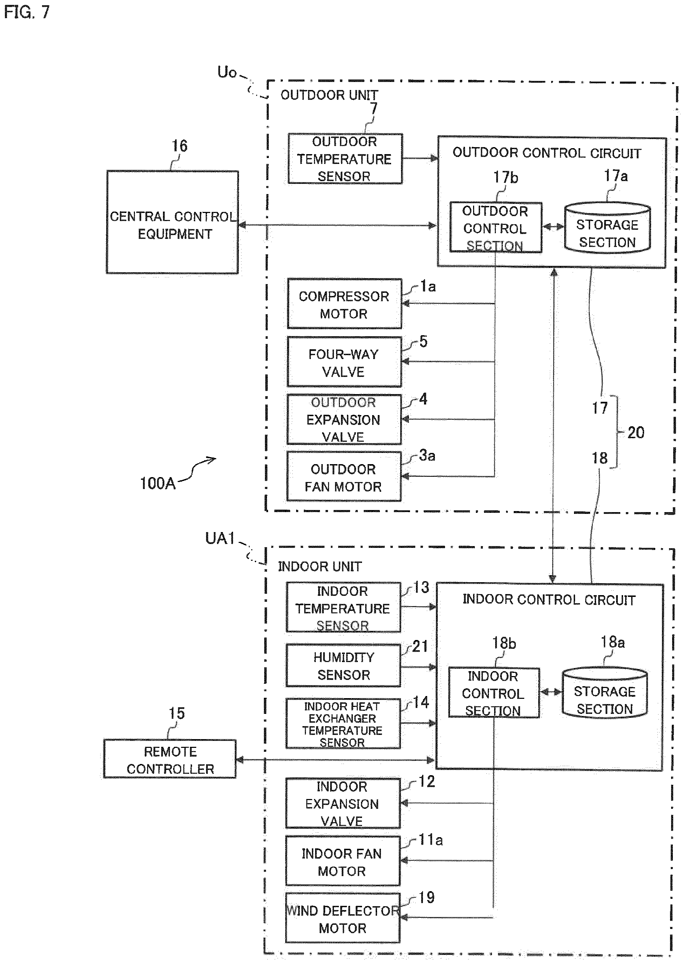

Fig. 7 is a functional block diagram of an air-conditioner according to a variation of the first embodiment. The air-conditioner 100A shown in Fig. 7 is different from that of the first embodiment (see Fig. 3) in that a humidity sensor 21 is added to an indoor unit UA1, but other points are similar to those of the first embodiment. The remaining three indoor units not shown in Fig. 7 also have configurations similar to that of the indoor unit UA1.

The humidity sensor 21 shown in Fig. 7 is a sensor configured to detect the humidity of the air-conditioning room, and is placed at a predetermined location in the indoor unit UA1. Based on a detection value of the humidity sensor 21, the availability of the washing processing including freezing of the indoor heat exchanger 10 is determined for each indoor unit. That is, in the variation of the first embodiment, a condition where the detection value of the humidity sensor 21 is within a predetermined range is used as the predetermined condition regarding the availability of the processing of freezing the indoor heat exchanger 10.

Note that when the humidity of the air-conditioning room is too high, there is a high probability that during freezing of the indoor heat exchanger 10, dew is formed on the housing (not shown) of the indoor unit including such an indoor heat exchanger 10 and the so-called dew dripping is caused. On the other hand, when the humidity of the air-conditioning room is too low, there is a probability that even when the processing of freezing the indoor heat exchanger 10 is performed, frost formation on the indoor heat exchanger 10 does not progress. Considering this point, the above-described "predetermined range" is set in advance.

In a case where among the multiple indoor units U1, U2, U3 and U4, the indoor unit that the detection value of the humidity sensor 21 is within the predetermined range is present, the control section 20 performs the processing of freezing the indoor heat exchanger 10 in such an indoor unit while not performing the above-described processing (freezing) in the other indoor units that the detection values of the humidity sensors 21 are outside the predetermined range. That is, the determination processing of "INDOOR TEMPERATURE WITHIN PREDETERMINED RANGE?" at the step S104 in the flowchart of Fig. 4 is replaced with the determination processing of "AIR-CONDITIONING ROOM HUMIDITY WITHIN PREDETERMINED RANGE?" in the processing of the control section 20 in the variation of the first embodiment. The detection value of the humidity sensor 21 is used as described above so that the control section 20 can more properly determine the availability of the washing processing as compared to the first embodiment using the indoor temperature.

### «Second Embodiment»

A second embodiment is different from the first embodiment in that a control section 20 excludes an indoor unit which is of a type non-compliant with washing processing from a washing processing target. Note that a configuration (see Figs. 1 to 3) of an air-conditioner 100 and the flow of the washing processing (Figs. 5 and 6) are similar to those of the first embodiment. Thus, the differences from the first embodiment will be described, and description of overlapping contents will be omitted.

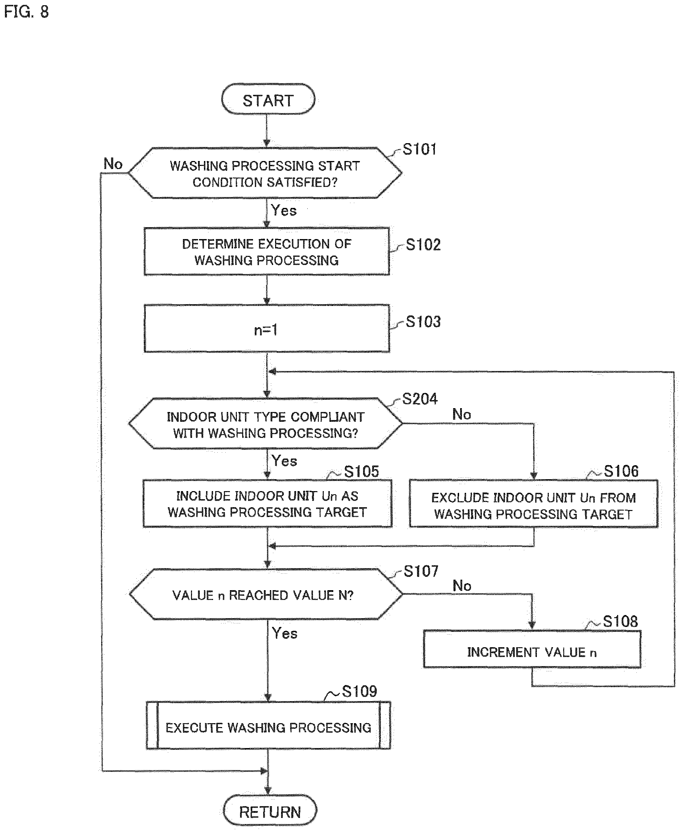

Fig. 8 is a flowchart of processing executed by the control section of the air-conditioner according to the second embodiment (see Figs. 1 and 3 as necessary). Note that each type of processing (S101 to S103, S105 to S109) other than a step S204 of Fig. 8 is similar to that of the first embodiment (see Fig. 4), and therefore, description thereof will be omitted.

It is assumed that a value n = 1 at the step S103, and the processing of the control section 20 proceeds to the step S204. At the step S204, the control section 20 determines whether or not an indoor unit Un is of a type compliant with the washing processing. The phrase "compliant with the washing processing" as described herein means that an indoor control circuit 18 (see Fig. 3) of the indoor unit Un (e.g., an indoor unit U1) is compliant with the washing processing such as freezing of an indoor heat exchanger 10. That is, in the second embodiment, a "predetermined condition" regarding availability of freezing of the indoor heat exchanger 10 is a condition where the indoor unit is of the type compliant with the processing of freezing the indoor heat exchanger 10.

In a multi-type air-conditioner including multiple indoor units, different types of indoor units are mixed in some cases. Old types of indoor units include those including indoor control circuits 18 (see Fig. 3) non-compliant with the washing processing. For this reason, in the second embodiment, even in a case where the old indoor unit type (e.g., the indoor unit U4 of Fig. 1) non-compliant with the washing processing is mixed, the washing processing is performed as necessary in an indoor unit (e.g., the indoor units U1, U2 and U3 of Fig. 1) compliant with the washing processing.

Note that information regarding, e.g., the model number of the indoor unit Un is notified from each indoor control circuit 18 to an outdoor control circuit 17 through a communication line m3 (see Fig. 2). The control section 20 (the outdoor control circuit 17: see Fig. 3) determines, based on the information on, e.g., the model number of the indoor unit Un, whether or not the indoor unit Un is of the type compliant with the washing processing.

At the step S204, in a case where the indoor unit Un is of the type compliant with the washing processing (S204: Yes), the processing of the control section 20 proceeds to the step S105. At the step S105, the control section 20 includes the indoor unit Un as the washing processing target.

On the other hand, in a case where the indoor unit Un is of the type non-compliant with the washing processing at the step S204 (S204: No), the processing of the control section 20 proceeds to the step S106. At the step S106, the control section 20 excludes the indoor unit Un from the washing processing target. The control section 20 performs such processing for each of the indoor units U1, U2, U3 and U4.

Then, at the step S109, the control section 20 executes the washing processing. That is, the control section 20 performs, among the multiple indoor units U1, U2, U3 and U4, the processing (freezing) in the indoor unit of which type is compliant with the processing of freezing the indoor heat exchanger 10 while not performing the processing (freezing) in the other indoor units of which types are not compliant with the processing of freezing the indoor heat exchangers 10. After the washing processing has been performed at the step S109, the processing of the control section 20 returns to "START" (RETURN).

### <Advantageous Effects>

According to the second embodiment, even in a case where the old indoor unit type which cannot perform the washing processing is mixed, the indoor heat exchanger 10 is washed in the indoor unit compliant with the washing processing. Thus, the control section 20 can properly perform the washing processing for the indoor heat exchanger 10 as compared to the case of performing the washing processing only when all of the indoor units U1, U2, U3 and U4 are compliant with the washing processing. Moreover, even in a case where the old type which cannot perform the washing processing is mixed, the control section 20 can flexibly handle the washing processing for the other indoor units.

### «Variation of Second Embodiment»

In the second embodiment, the case where the availability of the washing processing is determined for each indoor unit based on whether or not the indoor unit is of the type compliant with the washing processing has been described, but the present invention is not limited to such a case. For example, the control section 20 may determine the availability of the washing processing for each indoor unit based on whether or not the setting of the washing processing is valid in the indoor unit instead of the type of indoor unit. That is, as the predetermined condition regarding the availability of the processing of freezing the indoor heat exchanger 10, a condition where the setting of the above-described processing (freezing) is valid based on operation of a remote controller 15 (see Fig. 2) or central control equipment 16 (see Fig. 2) is used in a variation of the second embodiment.

The control section 20 performs, among the multiple indoor units, the processing (freezing) in the indoor unit that the setting of the processing of freezing the indoor heat exchanger 10 is valid while not performing the processing (freezing) in the other indoor units that the setting of the processing of freezing the indoor heat exchanger 10 is not valid.

That is, the determination processing of "INDOOR UNIT TYPE COMPLIANT WITH WASHING PROCESSING?" at the step S204 is replaced with the determination processing of "SETTING OF WASHING PROCESSING FOR INDOOR UNIT VALID?" in the flowchart of Fig. 8 in the processing of the control section 20 in the variation of the second embodiment. With this configuration, even in a case where the indoor units U1, U2, U3 and U4 include one that the setting of the washing processing is invalid, the washing processing can be performed in the remaining indoor units that the setting of the washing processing is valid. Regarding validity of the setting of the washing processing, the degree of freedom in setting by a user can be enhanced.

### «Third Embodiment»

A third embodiment is different from the first embodiment in that washing processing is performed based on whether or not a predetermined indoor unit is specified as a washing processing target. Note that a configuration (see Figs. 1 to 3) of an air-conditioner 100 and the flow of the washing processing (Figs. 5 and 6) are similar to those of the first embodiment. Thus, the differences from the first embodiment will be described, and description of overlapping contents will be omitted.

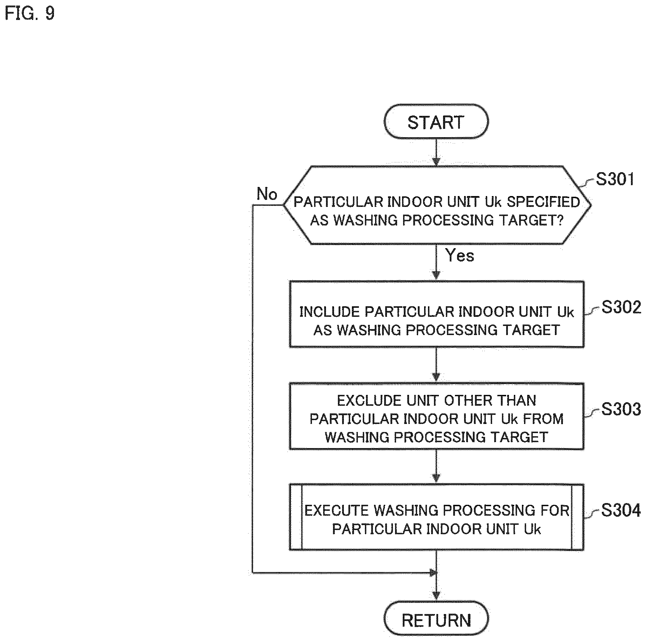

Fig. 9 is a flowchart regarding the washing processing in the air-conditioner according to the third embodiment (see Figs. 1 to 3 as necessary). At a step S301 of Fig. 9, a control section 20 determines whether or not a particular indoor unit Uk is specified as the washing processing target. Note that the indoor unit Uk (e.g., an indoor unit U1) can be specified as the washing processing target based on operation of a remote controller 15 (see Fig. 2) or central control equipment (see Fig. 2). The number of indoor units Uk to be the washing processing target may be one or more.

At the step S301, in a case where the particular indoor unit Uk is specified as the washing processing target (S301: Yes), the processing of the control section 20 proceeds to a step S302. On the other hand, in a case where there is no indoor unit specified as the washing processing target (S301: No), the processing of the control section 20 returns to "START" (RETURN).

At the step S302, the control section 20 takes the particular indoor unit Uk specified by, e.g., the remote controller 15 as the washing processing target. At a step S303, the control section 20 excludes each indoor unit other than the particular indoor unit Uk from the washing processing target. Note that the order of the processing at the steps S302, S303 may be inverted, or such processing may be performed in parallel.

Next, at a step S304, the control section 20 executes the washing processing for the particular indoor unit Uk specified by, e.g., the remote controller 15. Note that the contents of the washing processing are similar to those of the first embodiment (see Figs. 5 and 6), and therefore, description thereof will be omitted. After the washing processing has been performed at the step S304, the processing of the control section 20 returns to "START" (RETURN).

As described above, in the third embodiment, a "predetermined condition" regarding availability of the processing of freezing an indoor heat exchanger 10 is a condition where the predetermined indoor unit is specified as the target for the above-described processing (freezing) based on operation of the remote controller 15 (see Fig. 2) or the central control equipment 16 (see Fig. 2). The control section 20 performs, among the multiple indoor units U1, U2, U3 and U4, the processing of freezing the indoor heat exchanger 10 in the indoor unit specified as the processing target while not performing the processing (freezing) in the other indoor units not specified as the processing (freezing) target. With this configuration, a user's intention to perform the washing processing in the particular indoor unit Uk can be properly reflected.

### <Advantageous Effects>

According to the third embodiment, in a case where the indoor unit U1 is, for example, placed at a location (an air-conditioning room where dust is easily caused) where the indoor heat exchanger 10 easily gets dirty, the washing processing for the indoor unit U1 can be concentratedly performed. Thus, the user's intention to perform the washing processing in the particular indoor unit U1 can be properly reflected.

In the third embodiment, the control section 20 includes the particular indoor unit U1 as the washing processing target, and excludes the other indoor units U2, U3 and U4 from the washing processing target. Thus, there is almost no probability that the air-conditioning rooms are cooled by cold air accompanied by freezing of the indoor heat exchangers 10 of these indoor units U2, U3 and U4. Consequently, degradation of user comfortability can be reduced.

### <<Variations>>

The air-conditioner 100 according to the present invention has been described above with reference to each embodiment, but the present invention is not limited to description of these embodiments and various changes can be made to the present invention. For example, in the first embodiment, the processing of freezing the indoor heat exchanger 10 has been described, but the present invention is not limited to such processing. That is, dew may be formed on the indoor heat exchanger 10 instead of freezing the indoor heat exchanger 10. In a case where dew is formed on the indoor heat exchanger 10 as described above, the control section 20 adjusts, e.g., the degree of opening of the indoor expansion valve 12 such that the temperature of the indoor heat exchanger 10 is equal to or lower than an external air dew point and higher than a predetermined freezing temperature, and keeps such a state for a predetermined time. The above-described "freezing temperature" is a temperature at which moisture contained in air starts freezing on the indoor heat exchanger 10 when the temperature of the indoor heat exchanger 10 is gradually decreased. Note that control contents are similar to those in the case of "freezing," except that the degree of opening of the indoor expansion valve 12 is higher in "dew formation" than in the case of "freezing" the indoor heat exchanger 10. The same also applies to the second embodiment.

In each embodiment, the processing that the control section 20 causes, after freezing of the indoor heat exchanger 10, the indoor heat exchanger 10 to function as the condenser to defrost the indoor heat exchanger 10 has been described, but the present invention is not limited to such processing. For example, after freezing of the indoor heat exchanger 10, the control section 20 may increase (e.g., fully open) the degree of opening of the indoor expansion valve 12 than that upon freezing. With this configuration, high-temperature refrigerant flows into the indoor heat exchanger 10 from the outdoor heat exchanger 2 through the indoor expansion valve 12, thereby defrosting the indoor heat exchanger 10.

In each embodiment, a case where the washing processing start command is input to the indoor unit not targeted for the washing processing from, e.g., the remote controller 15 (see Fig. 2) has not been described specifically, but the control section 20 may perform the following processing. That is, even in a case where the command for starting the processing of freezing the indoor heat exchanger 10 is input to a predetermined indoor unit included in the multiple indoor units U1, U2, U3 and U4 from the remote controller 15 (see Fig. 2) or the central control equipment 16 (see Fig. 2), when the predetermined indoor unit does not satisfy a "predetermined condition," the control section 20 does not perform the above-described processing (freezing) for the predetermined indoor unit. Note that as the above-described "predetermined condition," those described in each embodiment or the like can be used.

The control section 20 preferably causes the remote controller 15 (see Fig. 2) connected to the indoor unit not satisfying the above-described "predetermined condition" to display the indication of the predetermined condition being not satisfied. In such processing, the control section 20 may cause the remote controller 15 to constantly display the indication of the predetermined condition being not satisfied, or may cause the remote controller 15 to display the indication of the predetermined condition being not satisfied in a case where the user has pressed the washing operation start button (not shown) of the remote controller 15. With this configuration, the user can grasp that the washing processing cannot be performed in the predetermined indoor unit in a current situation.

As the predetermined condition for performing the processing of freezing the indoor heat exchanger 10, a condition where a time period for performing the processing (freezing) comes may be used. Note that the time period for performing the above-described processing (freezing) can be set for each of the multiple indoor units U1, U2, U3 and U4 based on operation of the remote controller 15 or the central control equipment 16. The control section 20 may perform, among the multiple indoor units U1, U2, U3 and U4, the processing (freezing) in the indoor unit that the time period for performing the above-described processing (freezing) comes while not performing the processing (freezing) in the other indoor units that the time period for performing the processing (freezing) does not come. With this configuration, freezing of the indoor heat exchanger 10 can be avoided in, e.g., a time period in which there is a high probability that a person is present in the air-conditioning room. Thus, a user's intention not to cool the air-conditioning room can be reflected. Note that as the above-described processing, dew may be formed on the indoor heat exchanger 10 instead of freezing the indoor heat exchanger 10. In addition to the condition regarding the time period, e.g., the condition where the setting of freezing (or dew formation) of the indoor heat exchanger 10 is valid or the condition where the indoor unit is of the type compliant with the freezing processing may be combined as necessary. In a specific example, even when the setting of freezing of the indoor heat exchanger 10 is valid and the indoor unit is of the type compliant with the freezing processing, if the time period for freezing the indoor heat exchanger 10 does not come, the control section 20 may exclude such an indoor unit from the washing processing target.

As the predetermined condition for performing the processing of freezing the indoor heat exchanger 10, the condition where the cumulative value (the sum) of the air-conditioning operation time from the end of the previous processing (freezing) or the cumulative value (the sum) of the drive time of the indoor fan 11 from the end of the previous processing (freezing) reaches the predetermined value may be used. The control section 20 performs, among the multiple indoor units U1, U2, U3 and U4, the processing of freezing the indoor heat exchanger 10 in the indoor unit that the above-described cumulative value of the air-conditioning operation time or the cumulative value of the drive time of the indoor fan 11 reaches the predetermined value while not performing the processing of freezing the indoor heat exchanger 10 in the other indoor units that the cumulative value of the air-conditioning operation time or the cumulative value of the drive time of the indoor fan 11 does not reach the predetermined value. With this configuration, the control section 20 can properly start freezing the indoor heat exchanger 10 based on, e.g., the cumulative value of the air-conditioning operation time. Note that as the above-described processing, dew may be formed on the indoor heat exchanger 10 instead of freezing the indoor heat exchanger 10.

The embodiments can be combined as necessary. For example, the first embodiment and the second embodiment may be combined such that the control section 20 performs the following processing. That is, the control section 20 may perform the washing processing in the indoor unit that the indoor temperature is within the predetermined range (the first embodiment) and the indoor unit is of the type compliant with the washing processing (the second embodiment). On the other hand, the control section 20 may not perform the washing processing in the indoor unit that the indoor temperature is outside the predetermined range (the first embodiment) or the indoor unit is of the type non-compliant with the washing processing (the second embodiment).

For example, the first embodiment and the third embodiment may be combined such that the control section 20 performs the following processing. That is, the control section 20 may perform the washing processing in the indoor unit that the indoor temperature is within the predetermined range (the first embodiment) and the indoor unit is specified as the washing processing target by operation of, e.g., the remote controller 15 (the third embodiment) (see Fig. 2). On the other hand, the control section 20 may not perform the washing processing in the indoor unit that the indoor temperature is outside the predetermined range (the first embodiment) or the indoor unit is not specified as the washing processing target by operation of, e.g., the remote controller 15 (the third embodiment) (see Fig. 2).

As a reference for determination on whether or not the washing processing is to be performed, at least one condition of a date, a day, or a time period specified by operation of the remote controller 15 or the central control equipment 16 may be added as necessary. In each embodiment, the case where the washing processing includes freezing, defrosting, and drying of the indoor heat exchanger 10 has been described (see Fig. 5), but the present invention is not limited to such a case. For example, one or both of defrosting and drying of the indoor heat exchanger 10 may be omitted as necessary. This is because defrosting or drying of the indoor heat exchanger 10 progresses by natural convection of air in the indoor unit.

The types of indoor units U1 to U4 are not specifically limited. For example, any one of multiple types including a four-direction cassette type, a ceiling embedded type, a floor standing type, and a wall hanging type may be used. Alternatively, multiple types of indoor units may be mixed.

In each embodiment, the configuration in which the outdoor unit Uo (see Fig. 1) includes the outdoor expansion valve 4 and the four-way valve 5 has been described, but the present invention is not limited to such a configuration. For example, the outdoor expansion valve 4 and the four-way valve 5 may be omitted from an air-conditioner dedicated to air-cooling. In each embodiment, the configuration in which the four indoor units U1, U2, U3 and U4 (see Fig. 1) are provided has been described, but the number of indoor units connected in parallel in a single system may be two, three, or five or more.

In each embodiment, the configuration in which the air-conditioner 100 (see Fig. 1) includes the single outdoor unit Uo has been described, but it may be configured such that multiple outdoor units are connected in parallel in a single system. Each embodiment is applicable to various types of air-conditioners such as a building multi-type air-conditioner (variable refrigerant flow (VRF)) and a packaged air-conditioner (PAC).

A program causing a computer to execute the processing (see Figs. 4, 5, 8, and 9) of the control section 20 can be provided through a communication line, or a predetermined program can be distributed with the predetermined program being written in a recording medium such as a CD-ROM.

Each embodiment has described the details for simply describing the present invention, and is not limited to one including all configurations described above. Addition/omission/replacement of other configurations may be made to some of the configurations of each embodiment. The mechanisms and configurations necessary for description have been described above, and all mechanisms and configurations for a product are not necessarily described.

### LIST OF REFERENCE SIGNS

1 Compressor
2 Outdoor Heat Exchanger
3 Outdoor Fan
4 Outdoor Expansion Valve
5 Four-Way Valve
6 Accumulator
10 Indoor Heat Exchanger
11 Indoor Fan
12 Indoor Expansion Valve
13 Indoor Temperature Sensor
14 Indoor Heat Exchanger Temperature Sensor
15 Remote Controller
16 Central Control Equipment
20 Control Section
21 Humidity Sensor
100, 100A Air-Conditioner
J1, J2, J3, J4, J5, J6, J7, J8, J9, J10, J11, J12, J13, J14 Pipe
m4 Line
m5 Communication Line
Q Refrigerant Circuit
Uo Outdoor Unit
U1, U2, U3, U4, U1A Indoor Unit

## Claims

1. An air-conditioner comprising:
a refrigerant circuit configured such that an outdoor unit including a compressor and an outdoor heat exchanger and multiple indoor units including indoor expansion valves and indoor heat exchangers are connected to each other through a pipe; and
a control section configured to control at least the compressor and the multiple indoor expansion valves,
wherein in a case where among the multiple indoor units, an indoor unit satisfying a predetermined condition is present, the control section performs processing of freezing or forming dew on the indoor heat exchanger of the indoor unit while not performing the processing in the other indoor units not satisfying the predetermined condition, and
the predetermined condition is a condition regarding availability of the processing.

2. An air-conditioner according to claim 1, further comprising:
an indoor temperature sensor configured to detect an indoor temperature as an air-conditioning room temperature,
wherein the predetermined condition is a condition where a detection value of the indoor temperature sensor is within a predetermined range, and
in a case where among the multiple indoor units, an indoor unit that the detection value of the indoor temperature sensor is within the predetermined range is present, the control section performs the processing in the indoor unit while not performing the processing in the other indoor units that the detection value of the indoor temperature sensor is outside the predetermined range.

3. The air-conditioner according to claim 1, further comprising:
a humidity sensor configured to detect an air-conditioning room humidity,
wherein the predetermined condition is a condition where a detection value of the humidity sensor is within a predetermined range, and
in a case where among the multiple indoor units, an indoor unit that the detection value of the humidity sensor is within the predetermined range is present, the control section performs the processing in the indoor unit while not performing the processing in the other indoor units that the detection value of the humidity sensor is outside the predetermined range.

4. The air-conditioner according to claim 1, wherein
the predetermined condition is a condition where an indoor unit is of a type compliant with the processing, and
the control section performs, among the multiple indoor units, the processing in the indoor unit compliant with the processing while not performing the processing in the other indoor units non-compliant with the processing.

5. The air-conditioner according to claim 1, further comprising:
a remote controller connected to each indoor unit through a line; and
central control equipment connected to the outdoor unit through a communication line,
wherein the predetermined condition is a condition where a setting of the processing is valid based on operation of the remote controller or the central control equipment, and
the control section performs, among the multiple indoor units, the processing in the indoor unit that the setting of the processing is valid while not performing the processing in the other indoor units that the setting of the processing is not valid.

6. The air-conditioner according to claim 1, further comprising:
a remote controller connected to each indoor unit through a line; and
central control equipment connected to the outdoor unit through a communication line,
wherein the predetermined condition is a condition where a predetermined indoor unit is specified as a processing target based on operation of the remote controller or the central control equipment, and
the control section performs, among the multiple indoor units, the processing in an indoor unit specified as the processing target while not performing the processing in the other indoor units not specified as the processing target.

7. The air-conditioner according to claim 1, further comprising:
a remote controller connected to each indoor unit through a line; and
central control equipment connected to the outdoor unit through a communication line,
wherein even in a case where a processing start command is input to a predetermined indoor unit included in the multiple indoor units from the remote controller or the central control equipment, when the predetermined indoor unit does not satisfy the predetermined condition, the control section does not perform the processing for the predetermined indoor unit.

8. The air-conditioner according to claim 1, further comprising:
a remote controller connected to each indoor unit through a line,
wherein the control section causes the remote controller connected to the indoor units not satisfying the predetermined condition to display an indication of the predetermined condition being not satisfied.

9. The air-conditioner according to claim 1, further comprising:
a remote controller connected to each indoor unit through a line; and
central control equipment connected to the outdoor unit through a communication line,
wherein a time period for performing the processing is settable for each of the multiple indoor units based on operation of the remote controller or the central control equipment,
the predetermined condition is a condition where the time period for performing the processing comes, and
the control section performs, among the multiple indoor units, the processing in an indoor unit that the time period for performing the processing comes while not performing the processing in the other indoor units that the time period for performing the processing does not come.

10. The air-conditioner according to claim 1, wherein
the predetermined condition is a condition where a cumulative value of an air-conditioning operation time from an end of previous processing or a cumulative value of a drive time of an indoor fan from the end of the previous processing reaches a predetermined value, and
the control section performs, among the multiple indoor units, the processing in an indoor unit that the cumulative value of the air-conditioning operation time or the cumulative value of the drive time of the indoor fan reaches the predetermined value while not performing the processing in the other indoor units that the cumulative value of the air-conditioning operation time or the cumulative value of the drive time of the indoor fan does not reach the predetermined value.

11. The air-conditioner according to claim 1, wherein
during the processing, the control section causes, among the multiple indoor units, the indoor heat exchanger of the indoor unit targeted for the processing to function as an evaporator while closing the indoor expansion valves of the indoor units not targeted for the processing, and
after the processing, the control section causes, among the multiple indoor units, the indoor heat exchanger of the indoor unit targeted for the processing to function as a condenser while opening the indoor expansion valves of the indoor units not targeted for the processing.

## Amended claims

### Amended claims under Art. 19.1 PCT

1. An air-conditioner (100, 100A) comprising:
a refrigerant circuit (Q) configured such that an outdoor unit (Uo) including a compressor (1) and an outdoor heat exchanger (2) and multiple indoor units (U1, U2, U3, U4, U1A) including indoor heat exchangers (10) are connected to each other through a pipe (Jl, J2, J3, J4, J5, J6, J7, J8, J9, J10);
a control section (20) configured to control at least the compressor (1); and
a remote controller connected to the indoor units (U1, U2, U3, U4, U1A),
the air-conditioner (100, 100A) being **characterized in that**
in a case where among the multiple indoor units (U1, U2, U3, U4, U1A), an indoor unit (U1, U2, U3, U4, U1A) satisfying a predetermined condition is present, the control section (20) performs processing of freezing or forming dew on the indoor heat exchanger (10) of the indoor unit (U1, U2, U3, U4, U1A) while not performing the processing in the other indoor units (U1, U2, U3, U4, U1A) not satisfying the predetermined condition,
the predetermined condition is a condition regarding availability of the processing, and
even in a case where a processing start command is input to a predetermined indoor unit (U1, U2, U3, U4, U1A) included in the multiple indoor units (U1, U2, U3, U4, U1A) from the remote controller, when the predetermined indoor unit (U1, U2, U3, U4, U1A) does not satisfy the predetermined condition, the control section (20) does not perform the processing for the predetermined indoor unit (U1, U2, U3, U4, U1A).

2. An air-conditioner (100, 100A) comprising:
a refrigerant circuit (Q) configured such that an outdoor unit (Uo) including a compressor (1) and an outdoor heat exchanger (2) and multiple indoor units (U1, U2, U3, U4, U1A) including indoor expansion valves (12) and indoor heat exchangers (10) are connected to each other through a pipe (J1, J2, J3, J4, J5, J6, J7, J8, J9, J10); and
a control section (20) configured to control at least the compressor (1) and the multiple indoor expansion valves (12),
the air-conditioner (100, 100A) being **characterized in that**
in a case where among the multiple indoor units (U1, U2, U3, U4, U1A), an indoor unit (U1, U2, U3, U4, U1A) satisfying a predetermined condition is present, the control section (20) performs processing of freezing or forming dew on the indoor heat exchanger (10) of the indoor unit (U1, U2, U3, U4, U1A) while not performing the processing in the other indoor units (U1, U2, U3, U4, U1A) not satisfying the predetermined condition,
the predetermined condition is a condition regarding availability of the processing,
during the processing, the control section (20) causes, among the multiple indoor units (U1, U2, U3, U4, U1A), the indoor heat exchanger (10) of the indoor unit (U1, U2, U3, U4, U1A) targeted for the processing to function as an evaporator while closing the indoor expansion valves (12) of the indoor units (U1, U2, U3, U4, U1A) not targeted for the processing, and
after the processing, the control section (20) causes, among the multiple indoor units (U1, U2, U3, U4, U1A), the indoor heat exchanger (10) of the indoor unit (U1, U2, U3, U4, U1A) targeted for the processing to function as a condenser while opening the indoor expansion valves (12) of the indoor units (U1, U2, U3, U4, U1A) not targeted for the processing.

3. The air-conditioner (100, 100A) according to claim 1 or 2, further comprising:
an indoor temperature sensor (13) configured to detect an indoor temperature as an air-conditioning room temperature,
wherein the predetermined condition is a condition where a detection value of the indoor temperature sensor (13) is within a predetermined range, and
in a case where among the multiple indoor units (U1, U2, U3, U4, U1A), an indoor unit (U1, U2, U3, U4, U1A) that the detection value of the indoor temperature sensor (13) is within the predetermined range is present, the control section (20) performs the processing in the indoor unit (U1, U2, U3, U4, U1A) while not performing the processing in the other indoor units (U1, U2, U3, U4, U1A) that the detection value of the indoor temperature sensor (13) is outside the predetermined range.

4. The air-conditioner (100, 100A) according to claim 1 or 2, further comprising:
a humidity sensor (21) configured to detect an air-conditioning room humidity,
wherein the predetermined condition is a condition where a detection value of the humidity sensor (21) is within a predetermined range, and
in a case where among the multiple indoor units (U1, U2, U3, U4, U1A), an indoor unit (U1, U2, U3, U4, U1A) that the detection value of the humidity sensor (21) is within the predetermined range is present, the control section (20) performs the processing in the indoor unit (U1, U2, U3, U4, U1A) while not performing the processing in the other indoor units (U1, U2, U3, U4, U1A) that the detection value of the humidity sensor (21) is outside the predetermined range.

5. The air-conditioner (100, 100A) according to claim 1 or 2, wherein
the predetermined condition is a condition where an indoor unit (U1, U2, U3, U4, U1A) is of a type compliant with the processing, and
the control section (20) performs, among the multiple indoor units (U1, U2, U3, U4, U1A), the processing in the indoor unit (U1, U2, U3, U4, U1A) compliant with the processing while not performing the processing in the other indoor units (U1, U2, U3, U4, U1A) non-compliant with the processing.

6. The air-conditioner (100, 100A) according to claim 1, further comprising:
central control equipment (16) connected to the outdoor unit (Uo) through a communication line (m5),
wherein the predetermined condition is a condition where a setting of the processing is valid based on operation of the remote controller or the central control equipment (16), and
the control section (20) performs, among the multiple indoor units (U1, U2, U3, U4, U1A), the processing in an indoor unit (U1, U2, U3, U4, U1A) that the setting of the processing is valid while not performing the processing in the other indoor units (U1, U2, U3, U4, U1A) that the setting of the processing is not valid.

7. The air-conditioner (100, 100A) according to claim 1, further comprising:
central control equipment (16) connected to the outdoor unit (Uo) through a communication line (m5),
wherein the predetermined condition is a condition where a predetermined indoor unit (U1, U2, U3, U4, U1A) is specified as a processing target based on operation of the remote controller or the central control equipment (16), and
the control section (20) performs, among the multiple indoor units (U1, U2, U3, U4, U1A), the processing in the indoor unit (U1, U2, U3, U4, U1A) specified as the processing target while not performing the processing in the other indoor units (U1, U2, U3, U4, U1A) not specified as the processing target.

8. The air-conditioner (100, 100A) according to claim 1, wherein
the control section (20) causes the remote controller connected to the indoor units (U1, U2, U3, U4, U1A) not satisfying the predetermined condition to display an indication of the predetermined condition being not satisfied.

9. The air-conditioner (100, 100A) according to claim 1, further comprising:
central control equipment (16) connected to the outdoor unit (Uo) through a communication line (m5),
wherein a time period for performing the processing is settable for each of the multiple indoor units (U1, U2, U3, U4, U1A) based on operation of the remote controller or the central control equipment (16),
the predetermined condition is a condition where the time period for performing the processing comes, and
the control section (20) performs, among the multiple indoor units (U1, U2, U3, U4, U1A), the processing in an indoor unit (U1, U2, U3, U4, U1A) that the time period for performing the processing comes while not performing the processing in the other indoor units (U1, U2, U3, U4, U1A) that the time period for performing the processing does not come.

10. The air-conditioner (100, 100A) according to claim 1 or 2, wherein
the predetermined condition is a condition where a cumulative value of an air-conditioning operation time from an end of previous processing or a cumulative value of a drive time of an indoor fan (11) from the end of the previous processing reaches a predetermined value, and
the control section (20) performs, among the multiple indoor units (U1, U2, U3, U4, U1A), the processing in an indoor unit (U1, U2, U3, U4, U1A) that the cumulative value of the air-conditioning operation time or the cumulative value of the drive time of the indoor fan (11) reaches the predetermined value while not performing the processing in the other indoor units (U1, U2, U3, U4, U1A) that the cumulative value of the air-conditioning operation time or the cumulative value of the drive time of the indoor fan (11) does not reach the predetermined value.
